# EUROPÄISCHE PATENTSCHRIFT

(11) **EP 2 503 104 B1**
(45) Veröffentlichungstag und Bekanntmachung des Hinweises auf die Patenterteilung: **28.02.2018**
(21) Anmeldenummer: 11195877.3
(22) Anmeldetag: 28.12.2011
(51) Int. Cl.: F01D 15/10, F02C 7/06, F01D 25/16

(54) **Turbomaschine**
Turbo engine
Turbomachine

(30) Priorität: 24.03.2011 DE 102011001530
(43) Veröffentlichungstag der Anmeldung: 26.09.2012
(73) Patentinhaber: Atlas Copco Energas GmbH, 50999 Köln (DE)
(72) Erfinder: Wiebe, Frank, 41542 Dormagen-Gohr (DE)
(74) Vertreter: Lorenz, Bernd Ingo Thaddeus

(56) Entgegenhaltungen:
- EP-A2- 1 217 219
- EP-A2- 2 017 435
- US-A- 4 358 253
- US-A- 4 747 722
- US-B1- 6 845 617

## Beschreibung

Die Erfindung betrifft eine Turbomaschine mit zumindest einem ersten und einem zweiten Radiallaufrad, deren Rückenflächen einander zugewandt sind, einer die Radiallaufräder tragenden Rotorwelle und einer Lageranordnung, wobei im Bereich beider Radiallaufräder Axiallager mit jeweils einer Rotorlagerhälfte und einer Statorlagerhälfte gebildet sind und wobei jeweils die Rotorlagerhälfte an der Rückenfläche des zugeordneten Radiallaufrades gebildet ist.

Um den Axialschub eines Rotors einer Turbomaschine mittels einer Magnetlageranordnung aufzufangen, werden in der Praxis üblicherweise Axiallagerflächen eingesetzt, die entweder direkt an der Welle oder durch eine zusätzlich auf der Welle befestigte Axiallagerscheibe gebildet sind. Entsprechend sind Turbomaschinen mit einer axial magnetisch gelagerten Rotorwelle bekannt, bei denen die Magnetlagerhälften zur axialen Lagerung an einer Axiallagerscheibe oder an entgegengesetzten Wellenschultern angeordnet sind, die auf der Rotorwelle aufgeschrumpft sind.

Um bei einer Turbomaschine eine Ausgestaltung mit einem möglichst kurzen Rotor und einer möglichst kleinen Rotormasse zu ermöglichen, ist aus der EP 2 017 435 A2 eine Ausgestaltung mit den eingangs beschriebenen Merkmalen bekannt. Dadurch, dass die Rotorlagerhälften an den Rückenflächen der Radiallaufräder gebildet sind, kann der Platzbedarf für die Axiallagerung erheblich reduziert werden, wobei die Axiallagerhälften in eine Gehäusewand sowie in die Rückseite der Radiallaufräder integriert sind, welche auch unabhängig von der Lagerung vorhanden sein müssen. Die Anzahl separater Komponenten wird damit reduziert. Die aus der EP 2 017 435 A2 bekannte Ausführung ist ausgehend von einer mittig an dem Rotor angeordneten elektrischen Maschine in Richtung der beiden Radiallaufräder im Wesentlichen symmetrisch ausgebildet. Ausgehend von der elektrischen Maschine ist in beiden Richtungen nacheinander ein radiales Magnetlager, ein Fanglager, ein Durchlass durch die zugeordnete Statorlagerhälfte mit einer innenliegenden Wellenabdichtung und schließlich am Ende der Rotorwelle fliegend das entsprechende Laufrad angeordnet. Ausgehend von der elektrischen Maschine reduziert sich der Durchmesser der Rotorwelle in beiden Richtungen sukzessive entsprechend der genannten, entlang der Rotorwelle vorgesehenen Komponenten. Bei der Montage muss entsprechend erst die Rotorwelle mit der elektrischen Maschine in das Gehäuse eingesetzt werden, wobei an beiden Seiten die weiteren Bestandteile und abschließend die beiden Laufräder aufgesetzt werden. Um nachträglich eine Wartung zu ermöglichen, muss die Turbomaschine an beiden Seiten zugänglich sein, wobei auch beide Axiallaufräder demontierbar auszuführen sind.

Vor diesem Hintergrund liegt der Erfindung die Aufgabe zugrunde, die Montage und Demontage zu vereinfachen, die Wartungsmöglichkeiten zu verbessern sowie eine wirksame Axiallagerung zu gewährleisten.

Ausgehend von einer Turbomaschine mit den eingangs beschriebenen Merkmalen wird die Aufgabe erfindungsgemäß gelöst durch eine Turbomaschine gemäß Anspruch 1. Das erste Radiallaufrad ist hierbei unlösbar und das zweite Radiallaufrad demontierbar mit der Welle verbunden und die Rotorwelle verjüngt sich ausgehend von dem ersten Radiallaufrad in Richtung des zweiten Radiallaufrades oder weist einen gleichbleibenden Durchmesser auf.

Erfindungsgemäß ist eine asymmetrische Ausgestaltung vorgesehen, wobei das erste Laufrad fest und unlösbar mit der Rotorwelle verbunden ist. Damit ist im Rahmen der Erfindung gemeint, dass das erste Radiallaufrad nicht oder nur mit einem sehr großen Kraftaufwand oder mit besonderen Maßnahmen von der Rotorwelle getrennt werden kann. So ist es beispielsweise möglich, das erste Radiallaufrad auf die Rotorwelle aufzuschrumpfen, mit der Rotorwelle zu verschweißen oder zu verpressen. Bei der Montage werden dann ausgehend von dem ersten, unlösbar verbundenen Radiallaufrad die weiteren Komponenten, d. h. zumindest die Statorlagerhälften und schließlich das zweite Radiallaufrad nacheinander aufgesetzt. Hierzu muss die Rotorwelle ausgehend von dem ersten Radiallaufrad in Richtung des zweiten Radiallaufrades einen gleichbleibenden Durchmesser aufweisen oder sich vorzugsweise verjüngen. Bei einer bevorzugten, sich verjüngenden Ausgestaltung sind einzelne Stufen vorgesehen, wobei der Außendurchmesser der einzelnen Abschnitte an den Innendurchmesser der dort anzuordnenden Komponenten angepasst ist. Die einzelnen Komponenten können leicht bis zu dem Abschnitt geschoben werden, an dem diese zu befestigen sind. Durch die demontierbare Ausgestaltung des zweiten Radiallaufrades ist je nach Ausgestaltung auch eine Demontage oder zumindest Wartung der beschriebenen Komponenten möglich. Insbesondere sind die Teile der Axiallager ausgehend von dem zweiten Radiallaufrad zugänglich.

Um ein magnetisches Axiallager zu bilden, müssen die Rotorlagerhälften aus einem geeigneten, magnetisch mit den Spulen wechselwirkenden Material gebildet oder mit Permanentmagneten belegt sein. Häufig ist das für Laufräder eingesetzte Material nicht zur Bildung von Rotorlagerhälften eines Magnetlagers geeignet. Erfindungsgemäß ist zumindest eines der Radiallaufräder aus einem eine Schaufelanordnung umfassenden Laufradrohling und einer an der Rückseite des Laufradrohlings befestigten Scheibe aus einem anderen Material gebildet, wobei die Scheibe die Rotorlagerhälfte des entsprechenden Axiallagers bildet. Eine solche Scheibe bzw. ein solcher Ring mit einer mittigen Öffnung für die Rotorwelle kann beispielsweise mit dem Laufradrohling verschweißt sein. Um ein präzises Verschweißen zu ermöglichen, kann insbesondere eine Verbindung durch Reibschweißen vorgesehen sein. Alternativ ist es auch möglich, ein geeignetes Material, beispielsweise Permanentmagnete oder ein magnetisierbares Material in Form von Segmenten an der Rückseite der Radiallaufräder anzuordnen, insbesondere in entsprechende Vertiefungen einzusetzen.

Im Rahmen der Erfindung können die Statorlagerhälften auch auf besonders vorteilhafterweise jeweils einen ungeteilten Träger mit einem Durchgangsloch für die Rotorwelle aufweisen. Da die Statorlagerhälften von einer Seite bei der Montage auf die Rotorwelle aufgeschoben werden, ist eine Teilung in zwei Halbschalen oder in Segmente nicht erforderlich, wodurch sowohl die Stabilität und die Dichtheit verbessert als auch der Fertigungsaufwand reduziert werden.

Um ein Axiallager, insbesondere ein aktiv steuerbares Axiallager zu bilden, sind an einer der Lagerhälften Magnetwicklungen vorgesehen, welche ein die jeweils zugeordnete andere Lagerhälfte wirkendes, vorzugsweise bedarfsgerecht steuerbares Magnetfeld erzeugen. Aus praktischen Gründen ist es von Vorteil, wenn die Magnetwicklungen in die feststehenden Statorlagerhälften eingesetzt werden.

Um eine vollständige Lageranordnung zu bilden, ist auch ein Radiallager vorzusehen. Dieses kann beispielsweise zwischen den beiden beschriebenen, entgegengesetzt wirkenden Axiallagern auf der Rotorwelle angeordnet sein. Insbesondere kann als Radiallager auch ein Magnetlager mit einem Rotorring und einem Statorring vorgesehen sein.

Die Montage und die optional vorgesehene Demontage von einer Seite erlaubt es im Rahmen der Erfindung auch das erste Radiallaufrad mit weiteren Maschinenkomponenten fest in einem Hauptgehäuse anzuordnen. Zweckmäßigerweise ist dann vorgesehen, dass sich die Rotorwelle aus dem Hauptgehäuse heraus erstreckt, wodurch das zweite Radiallaufrad entsprechend außerhalb des Hauptgehäuses angeordnet ist.

Die Turbomaschine mit den zumindest zwei Radiallaufrädern, deren Rückenflächen einander zugewandt sind (back-to-back-Anordnung) kann als Kompressor, Expander oder Kompander vorgesehen sein. Während bei einem Kompressor mit zwei Verdichterlaufrädern ein Antrieb, insbesondere durch eine elektrische Maschine, vorzusehen ist, kann bei einem Expander mit zwei Laufrädern die freiwerdende Energie zurückgewonnen und über eine elektrische Maschine in Form eines Generators genutzt werden. Bei einem Kompander mit einem Verdichterlaufrad und einem Expander-Laufrad ist eine elektrische Maschine nur optional vorgesehen, wobei diese je nach Anwendungsfall als Generator oder Motor betrieben werden kann.

Gemäß einer bevorzugten Ausgestaltung der Erfindung sind die beiden Radiallaufräder jeweils auf einem Ende der Rotorwelle fliegend angeordnet. Grundsätzlich ist es aber auch denkbar, dass an zumindest einem der beiden Radiallaufräder die Rotorwelle sich über dieses Radiallaufrad hinaus erstreckt, wobei dann an der Rotorwelle noch zumindest eine weitere Einrichtung, beispielsweise ein weiteres Radiallaufrad angeordnet sein kann.

Die Erfindung wird im Folgenden anhand einer lediglich ein Ausführungsbeispiel darstellenden Zeichnung erläutert. Es zeigen:
Fig. 1 Komponenten einer erfindungsgemäßen Turbomaschine,
Fig. 2 die an ein Hauptgehäuse angeschlossene Anordnung gemäß der Fig. 1.

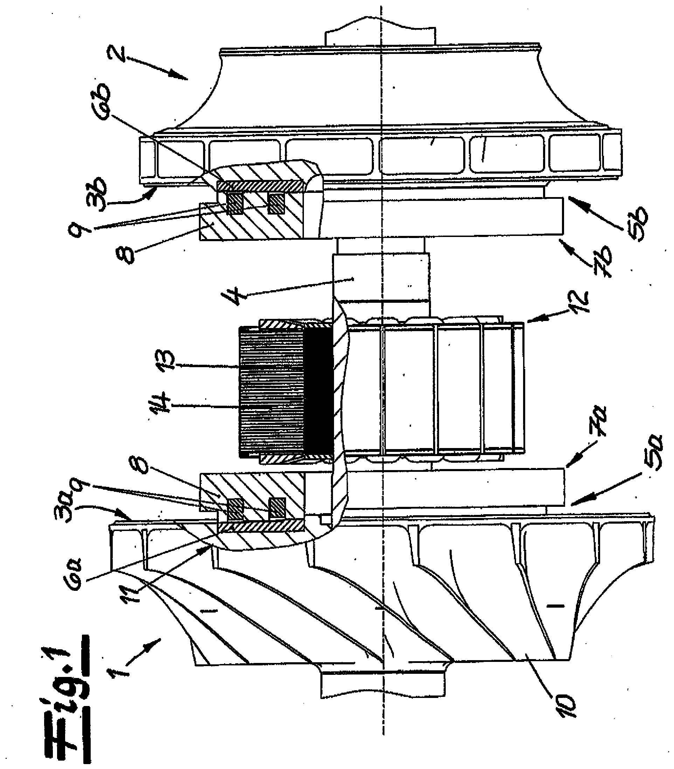

Die Fig. 1 zeigt die wesentlichen Komponenten einer erfindungsgemäßen Turbomaschine, wobei ein erstes Laufrad 1 und ein zweites Laufrad 2 in einer sogenannten back-to-back-Anordnung mit ihren Rückenflächen 3a, 3b einander zugewandt sind. Die beiden Radiallaufräder 1, 2 sind von einer Rotorwelle 4 getragen, welche an einer Lageranordnung gelagert ist. Die Lageranordnung umfasst im Bereich der beiden Radiallaufräder 1, 2 Axiallager 5a, 5b mit jeweils einer Rotorlagerhälfte 6a, 6b und einer Statorlagerhälfte 7a, 7b, wobei die Rotorlagerhälften 6a, 6b an der Rückenfläche 3a, 3b des zugeordneten Radiallaufrades 1, 2 gebildet sind.

Erfindungsgemäß ist das erste Radiallaufrad 1 unlösbar, beispielsweise durch ein Aufschrumpfen, mit der Rotorwelle 4 verbunden, während das zweite Radiallaufrad 2 demontierbar ist. Bei der Montage können also die beiden Statorlagerhälften 7a, 7b und schließlich das zweite Radiallaufrad 2 nacheinander auf die Rotorwelle 4 geschoben werden, wozu die Rotorwelle 4 sich in dem dargestellten Ausführungsbeispiel von dem ersten Radiallaufrad 1 in Richtung des zweiten Radiallaufrades 2 verjüngt. In umgekehrter Weise ist auch eine Demontage der Rotoranordnung möglich.

Der Fig. 1 ist weiter zu entnehmen, dass die Statorlagerhälften 7a, 7b jeweils einen ungeteilten Träger 8 mit einem Durchgangsloch für die Rotorwelle 4 sowie Magnetwicklungen 9 aufweisen, welche in Vertiefungen des jeweils zugeordneten Trägers 8 eingesetzt sind. Die an den Rückenflächen 3a, 3b der Radiallaufräder 1, 2 gebildeten Rotorlagerhälften 6a, 6b sind dagegen aus einem Material, welches mit den Magnetwicklungen 9 zusammenwirkt. An den Rotorlagerhälften 6a, 6b können beispielsweise Permanentmagnete, magnetisierbares Material oder auch ein Material, in dem ein Gegenfeld induziert wird, vorgesehen sein.

Das konkrete Ausführungsbeispiel gemäß der Fig. 1 zeigt exemplarisch eine Ausgestaltung, bei der das erste Radiallaufrad 1 aus einem eine Schaufelanordnung 10 umfassenden Laufradrohling 11 und einer an der Rückseite des Laufradrohlings 11 befestigten Scheibe aus einem anderen Material gebildet ist. Die Scheibe bildet die Rotorlagerhälfte 6a des entsprechenden Axiallagers 5a, wobei das Material hinsichtlich der magnetischen Eigenschaften ausgewählt ist. Die als Scheibe mit Durchgangsloch bzw. Ring ausgebildete Rotorlagerhälfte 6a kann beispielsweise durch Reibschweißen mit dem Laufringrohling 11 verbunden sein.

Die Fig. 1 zeigt des Weiteren, dass zwischen dem entgegengesetzt wirkenden Axiallagern 5a, 5b ein Radiallager 12 auf der Rotorwelle 4 angeordnet ist, welches als Magnetlager mit einem Rotorring 13 und einem Statorring 14 gebildet ist. Während der Statorring 14 Magnetwicklungen enthält, besteht der Rotorring aus einem Material mit geeigneten magnetischen Eigenschaften, um zusammen mit den Magnetwicklungen des Statorringes ein Radial-Magnetlager zu bilden.

Zur erkennen ist, dass bei der Montage zunächst eine Statorlagerhälfte 7a, das Radiallager 12, die andere Statorlagerhälfte 7b sowie schließlich das zweite Radiallaufrad 2 mit der entsprechenden Rotorlagerhälfte 6b an seiner Rückenfläche 3b sukzessive montiert werden. Um die Montage zu erleichtern, verjüngt sich die Rotorwelle 4 an einzelnen Stufen, wobei die Stufen jeweils einer der beschriebenen Komponenten zugeordnet sind.

Im Rahmen der erfindungsgemäßen Ausgestaltung ist die beschriebene Anordnung nicht zur sukzessive zu montieren sondern auch in umgekehrter Reihenfolge zumindest teilweise demontierbar, so dass nachträglich noch eine Wartung bzw. der Austausch einzelner Komponenten möglich ist.

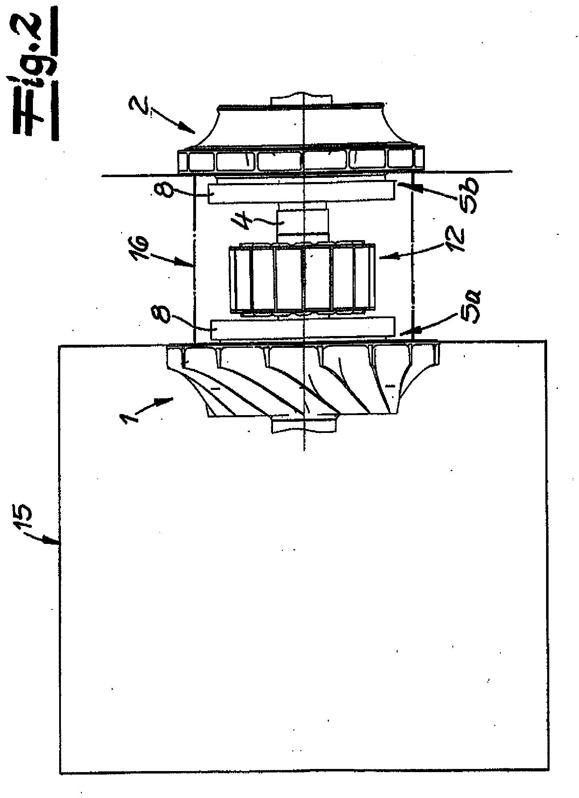

Beispielsweise kann das erste Radiallaufrad 1 mit weiteren Maschinenkomponenten fest in einem Hauptgehäuse 15 angeordnet sein, wobei sich die Rotorwelle 4 aus dem Hauptgehäuse 15 herauserstreckt und wobei das zweite Radiallaufrad 2 außerhalb des Hauptgehäuses 15 angeordnet ist. Eine entsprechende Ausgestaltung ist in der Fig. 2 angedeutet. Es ergibt sich der Vorteil, dass bei der Montage, Wartung und Demontage der Lageranordnung das Hauptgehäuse 15 geschlossen bleiben kann, während lediglich ein die Lageranordnung abdeckendes Zusatzgehäuse 16 entfernt werden muss.

Grundsätzlich kann die Turbomaschine auch eine in den Figuren nicht dargestellte elektrische Maschine aufweisen, die insbesondere zusammen mit dem Radiallager 12 zwischen den Radiallaufrädern 1, 2 angeordnet werden kann.

Des Weiteren können die Radiallaufräder 1, 2 auch jeweils auf einem Ende der Rotorwelle 4 fliegend angeordnet sein. Die Erfindung ist aber nicht auf eine derartige Ausgestaltung begrenzt. Grundsätzlich ist es auch möglich, dass sich die Rotorwelle 4 über zumindest eines der beiden Radiallaufräder 1, 2 hinauserstreckt.

## Patentansprüche

1. Turbomaschine mit zumindest einem ersten und einem zweiten Laufrad (1, 2), deren Rückenflächen (3a, 3b) einander zugewandt sind, einer die Radiallaufräder (1,2) tragenden Rotorwelle (4) und einer Lageranordnung, wobei im Bereich beider Radiallaufräder (1,2) Axiallager (5a, 5b) mit jeweils einer Rotorlagerhälfte (6a, 6b) und einer Statorlagerhälfte (7a, 7b) gebildet sind und wobei jeweils die Rotorlagerhälfte (6a, 6b) an der Rückenfläche (3a, 3b) des zugeordneten Radiallaufrades (1, 2) gebildet ist, **dadurch gekennzeichnet, dass** das erste Radiallaufrad (1) unlösbar und das zweite Radiallaufrad (2) demontierbar mit der Rotorwelle (4) verbunden ist und dass die Rotorwelle (4) ausgehend von dem ersten Radiallaufrad (1) in Richtung des zweiten Radiallaufrades (2) sich verjüngt oder einen gleichbleibenden Durchmesser aufweist, wobei zumindest eines der Radiallaufräder (1) aus einem eine Schaufelanordnung (10) umfassenden Laufradrohling (11) und einer an der Rückseite des Laufradrohlings (11) befestigten Scheibe aus einem anderen Material gebildet ist und die Scheibe die Rotorlagerhälfte (6a) des entsprechenden Axiallagers (5a) bildet.

2. Turbomaschine nach Anspruch 1, **dadurch gekennzeichnet, dass** das erste Radiallaufrad (1) auf die Rotorwelle (4) aufgeschrumpft ist.

3. Turbomaschine nach Anspruch 1 oder 2, **dadurch gekennzeichnet, dass** die Statorlagerhälften (7a, 7b) jeweils einen ungeteilten Träger (8) mit einem Durchgangsloch für die Rotorwelle (4) aufweisen.

4. Turbomaschine nach einem der Ansprüche 1 bis 3, **dadurch gekennzeichnet, dass** die Statorlagerhälften (7a, 7b) Magnetwicklungen (9) oder Permanentmagnete aufweisen.

5. Turbomaschine nach einem der Ansprüche 1 bis 4, **dadurch gekennzeichnet, dass** zwischen den Axiallagern (5a, 5b) ein Radiallager (12) auf der Rotorwelle (4) angeordnet ist.

6. Turbomaschine nach einem der Ansprüche 1 bis 5, **dadurch gekennzeichnet, dass** das erste Radiallaufrad (1) mit weiteren Maschinenkomponenten fest in einem Hauptgehäuse (15) angeordnet ist, wobei sich die Rotorwelle (4) aus dem Hauptgehäuse (15) herauserstreckt und wobei das zweite Radiallaufrad (2) außerhalb des Hauptgehäuses (15) angeordnet ist.

7. Turbomaschine nach einem der Ansprüche 1 bis 6, **dadurch gekennzeichnet, dass** zwischen den Radiallaufrädern (1, 2) eine elektrische Maschine vorgesehen ist.

8. Turbomaschine nach einem der Ansprüche 1 bis 7, **dadurch gekennzeichnet, dass** beide Radiallaufräder (1, 2) jeweils auf einem Ende der Rotorwelle (4) fliegend angeordnet sind.

## Claims

1. A turbomachine having: at least a first and a second rotor (1, 2), the rear faces (3a, 3b) of which face each other; a rotor shaft (4) which supports the radial rotors (1, 2); and a bearing assembly, axial bearings (5a, 5b) being formed in the region of both radial rotors (1, 2), said axial bearings each having a rotor bearing half (6a, 6b) and a stator bearing half (7a, 7b), and each rotor bearing half (6a, 6b) being formed on the rear face (3a, 3b) of the associated radial rotor (1, 2), **characterised in that** the first radial rotor (1) is connected non-detachably and the second radial rotor (2) is connected removably to the rotor shaft (4), and the rotor shaft (4) tapers or has a constant diameter in the direction towards the second radial rotor (2) starting from the first radial rotor (1), wherein at least one of the radial rotors (1) is formed from a rotor blank (11), which comprises a blade assembly (10), and a disc, which is fastened to the rear of the rotor blank (11) and consists of a different material, and the disc forms the rotor bearing half (6a) of the corresponding axial bearing (5a).

2. The turbomachine according to Claim 1, **characterised in that** the first radial rotor (1) is shrink-fitted onto the rotor shaft (4).

3. The turbomachine according to Claim 1 or 2, **characterised in that** the stator bearing halves (7a, 7b) each have an undivided carrier (8) with a through-hole for the rotor shaft (4).

4. The turbomachine according to any one of Claims 1 to 3, **characterised in that** the stator bearing halves (7a, 7b) have magnetic windings (9) or permanent magnets.

5. The turbomachine according to any one of Claims 1 to 4, **characterised in that** a radial bearing (12) is arranged on the rotor shaft (4) between the axial bearings (5a, 5b).

6. The turbomachine according to any one of Claims 1 to 5, **characterised in that** the first radial rotor (1) is arranged permanently together with further machine components in a main housing (15), wherein the rotor shaft (4) extends out of the main housing (15) and wherein the second radial rotor (2) is arranged outside the main housing (15).

7. The turbomachine according to any one of Claims 1 to 6, **characterised in that** an electric machine is provided between the radial rotors (1, 2).

8. The turbomachine according to any one of Claims 1 to 7, **characterised in that** both radial rotors (1, 2) are each arranged in a floating manner on an end of the rotor shaft (4).

## Revendications

1. Turbomachine avec au moins une première et une deuxième roue (1, 2), dont les surfaces arrière (3a, 3b) sont tournées l'une vers l'autre, un arbre de rotor (4) supportant les roues radiales (1, 2) et un agencement de palier, dans la zone des deux roues radiales (1, 2), des paliers axiaux (5a, 5b) étant formés avec respectivement une moitié de palier de rotor (6a, 6b) et une moitié de palier de stator (7a, 7b) et la moitié de palier de rotor (6a, 6b) étant respectivement formée sur la surface arrière (3a, 3b) de la roue radiale (1, 2) attribuée, **caractérisée en ce que** la première roue radiale (1) est reliée non démontable et la deuxième roue radiale (2) démontable à l'arbre de rotor (4) et **en ce que** l'arbre de rotor (4) se rétrécit en partant de la première roue radiale (1) en direction de la deuxième roue radiale (2) ou comporte un diamètre constant, au moins une des roues radiales (1) étant formée d'une ébauche de roue (11) comprenant un agencement d'aubes (10) et d'un disque en autre matériau fixé sur la face arrière de l'ébauche de roue (11) et le disque formant la moitié de palier de rotor (6a) du palier axial correspondant (5a).

2. Turbomachine selon la revendication 1, **caractérisée en ce que** la première roue radiale (1) est frettée sur l'arbre de rotor (4).

3. Turbomachine selon la revendication 1 ou 2, **caractérisée en ce que** les moitiés de palier de stator (7a, 7b) comportent respectivement un support entier (8) avec un trou traversant pour l'arbre de rotor (4).

4. Turbomachine selon l'une quelconque des revendications 1 à 3, **caractérisée en ce que** les moitiés de palier de stator (7a, 7b) comportent des enroulements magnétiques (9) ou des aimants permanents.

5. Turbomachine selon l'une quelconque des revendications 1 à 4, **caractérisée en ce qu'**un palier radial (12) est disposé sur l'arbre de rotor (4) entre les paliers axiaux (5a, 5b).

6. Turbomachine selon l'une quelconque des revendications 1 à 5, **caractérisée en ce que** la première roue radiale (1) est disposée solidairement avec d'autres composants de machine dans un boîtier principal (15), l'arbre de rotor (4) s'étendant à l'extérieur du boîtier principal (15) et la deuxième roue radiale (2) étant disposée en dehors du boîtier principal (15).

7. Turbomachine selon l'une quelconque des revendications 1 à 6, **caractérisée en ce qu'**une machine électrique est prévue entre les roues radiales (1, 2).

8. Turbomachine selon l'une quelconque des revendications 1 à 7, **caractérisée en ce que** les deux roues radiales (1, 2) sont montés respectivement en porte-à-faux sur une extrémité de l'arbre de rotor (4).
